# EUROPEAN PATENT APPLICATION

(11) **EP 4 134 277 A1**
(43) Date of publication of application: **15.02.2023**
(21) Application number: 22189992.5
(22) Date of filing: 11.08.2022
(51) Int. Cl.: B60Q 3/00, H05B 47/105

(54) **BRIGHTNESS ADJUSTING METHOD, APPARATUS, AND STORAGE MEDIUM FOR MULTI ILLUMINATION LIGHT SOURCES**

(30) Priority: 12.08.2021 CN 202110921655
(71) Applicant: Zhiji Automotive Technology Co., Ltd., Shanghai 201210 (CN)
(72) Inventor: ZHOU, Ziren, Shanghai, 201210 (CN); CUI, Wei, Shanghai, 201210 (CN)
(74) Representative: dompatent von Kreisler Selting Werner - Partnerschaft von Patent- und Rechtsanwälten mbB

(57) **Abstract**

A brightness adjusting method, an apparatus, and a storage medium for multi illumination light sources are provided in the present application. The brightness adjusting method includes: constructing at least one lamp group adjusting hot area (72) used for brightness adjusting triggering on a touchable brightness adjusting interface (71); recording a click position of a user's finger clicking on the touchable brightness adjusting interface (71), obtaining a target lamp group adjusting hot area where the click position is located, and continuously detecting and recording a current position of the user's finger before the user's finger is lifted; and performing switching of switch states and brightness adjusting of a target illumination light source corresponding to the target lamp group adjusting hot area according to the current position. The present application can simplify operation complexity of adjusting the illumination light sources, and can synchronously adjust a plurality of zonal illumination light sources.

## Description

### BACKGROUND OF THE DISCLOSURE

### Technical Field

The present application relates to a technical field of human-computer interaction (HCI), and specifically, to a brightness adjusting method, an apparatus, and a storage medium for multi illumination light sources that support synchronously adjusting of a plurality of zonal illumination light sources.

### Description of the Prior Art

Illumination light sources in an interior of a vehicle can provide required illumination for a driver and passengers. Physical buttons set next to the illumination light sources are generally used to control illumination switches in traditional vehicles. With the upgrading of vehicles, both the number of illumination light sources and their locations in a vehicle are increasing. Since drivers and passengers have different needs for brightness of the illumination light sources, zonal independent illumination has become a development trend. Zonal independent illumination can realize independent control of switches and adjustment of brightness respectively of illumination light sources within each area. As some vehicles even have six areas of independent illumination, more efficient operation methods are needed for the increasing brightness adjustment options.

In the current state of the art, adjusting of the illumination light sources through a screen or a control interface is supported in some intelligent vehicles. A common adjusting method is to group the illumination light sources directly, and present a switch button plus a brightness sliding bar on the screen or the control interface in the form of a list.

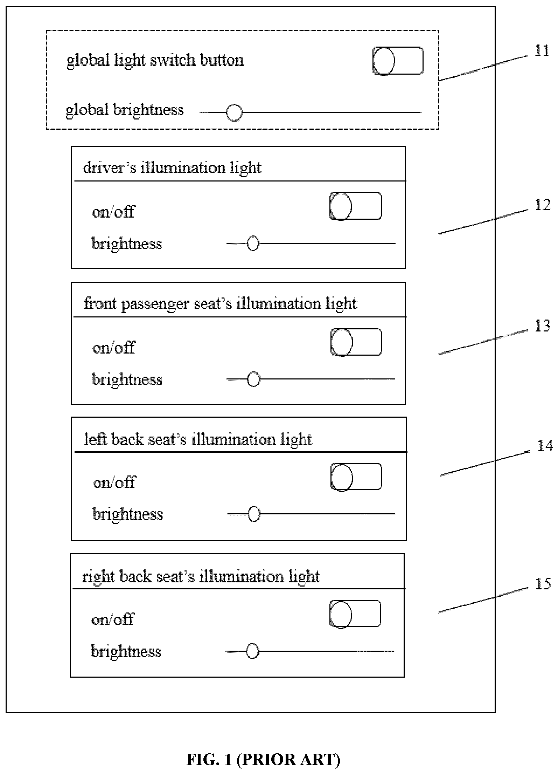

Please refer to FIG. 1, which is a schematic diagram of a brightness adjusting method for multiple illumination light sources in an interior of an existing vehicle. The control interface is equipped with a global light switch button and a brightness sliding bar 11, a driver's illumination light switch button and a brightness sliding bar 12, a front passenger seat's illumination light switch button and a brightness sliding bar 13, a left back seat's illumination light switch button and a brightness sliding bar 14, and a right back seat's illumination light switch button and a brightness sliding bar 15.

Not only this brightness adjusting method will lead to many interdependent buttons and sliding bars on the control interface, but also its interaction method is actually a direct copy of a control mechanism of traditional physical buttons. The control steps are cumbersome and complex, and a user's intention cannot be achieved intuitively and quickly. The operation method is not friendly and not efficient for the user, and intuitive blind operation cannot be realized by the user.

### BRIEF SUMMARY OF THE DISCLOSURE

The present application is to provide a brightness adjusting method, an apparatus, and a storage medium for multiple illumination light sources, which can simplify operation complexity of adjusting illumination light sources and support synchronously adjusting of a plurality of zonal illumination light sources.

In order to achieve the above-mentioned purpose, a brightness adjusting method of multiple illumination light sources is provided in a first embodiment of the present application, which is applied to an interior of a vehicle. The brightness adjusting method comprises: constructing at least one lamp group adjusting hot area used for brightness adjusting triggering on a touchable brightness adjusting interface; wherein the lamp group adjusting hot area comprises a plurality of sub-control hot areas and a total control hot area; each of the sub-control hot areas is used to adjust at least one of the multi illumination light sources, and the total control hot area is used to adjust all illumination light sources; recording a click position of a user's finger clicking on the touchable brightness adjusting interface, obtaining a target lamp group adjusting hot area where the click position is located, and continuously detecting and recording a current position of the user's finger before the user's finger is lifted; and performing switching of switch states and brightness adjusting of a target illumination light source corresponding to the target lamp group adjusting hot area according to the current position.

In order to achieve the above-mentioned purpose, a brightness adjusting apparatus for multiple illumination light sources is provided in a second embodiment of the present application, which is applied to an interior of a vehicle. The brightness adjusting apparatus comprises: a touchable brightness adjusting interface; a plurality of lamp group adjusting hot areas constructed on the touchable brightness adjusting interface and used for brightness adjusting triggering; wherein the lamp group adjusting hot areas comprise a plurality of sub-control hot areas and a total control hot area; each of the sub-control hot areas is used to adjust at least one of the multi illumination light sources, and the total control hot area is used to adjust all illumination light sources; a detecting module used for recording a click position of a user's finger clicking on the touchable brightness adjusting interface, obtaining a target lamp group adjusting hot area where the click position is located, and continuously detecting and recording a current position of the user's finger before the user's finger is lifted; and an adjusting module used for performing switching of switch states and brightness adjusting of a target illumination light source corresponding to the target lamp group adjusting hot area according to the current position.

In order to achieve the above-mentioned purpose, a computer readable storage medium is provided in a third embodiment of the present application. The storage medium stores computer executable program codes, and the program codes implement the steps of the above-mentioned brightness adjusting method when executed by a processor.

Compared with the prior art, the brightness adjusting method for multi illumination light sources provided in the embodiments of the present application can realize zonal independent illumination in a plurality of areas in the interior of a vehicle. The zonal independent illumination can realize independent control of switches and adjustment of brightness respectively of illumination light sources in each area; and the touchable brightness adjusting interface is simple, the touch operation is intuitive, simple, and efficient, and intuitive blind operation can be realized. The brightness adjusting method provided in the present application is more in line with a user's behaviors, and a control interface is more concise and understandable. Moreover, the present application can support switching of switch states and brightness adjusting of multiple illumination light sources at the same time.

### BRIEF DESCRIPTION OF THE DRAWINGS

In order to illustrate a technical scheme in the embodiments of the present application more clearly, accompanying drawings that need to be used in the description of the embodiments will be briefly introduced as follows. Obviously, the accompanying drawings in the following description show only some embodiments of the present application. For those skilled in the art, other drawings can also be obtained from these disclosed drawings without creative efforts.
FIG. 1 is a schematic diagram of a brightness adjusting method for multiple illumination light sources in an interior of an existing vehicle.
FIG. 2 is a flowchart of a brightness adjusting method for multi illumination light sources provided in an embodiment of the present application.
FIG. 3 is a schematic diagram of the division of a lamp group adjusting hot area provided in the embodiments of the present application.
FIG. 4 is a flowchart of a brightness adjusting example provided in the embodiments of the present application.
FIG. 5 is an enlarged schematic diagram of a brightness sliding bar provided in the embodiments of the present application.
FIG. 6 is a schematic diagram of the detection of a finger position provided in the embodiments of the present application.
FIG. 7 is a schematic architectural diagram of a brightness adjusting system for multiple illumination light sources provided in the embodiments of the present application.

### DETAILED DESCRIPTION OF THE PREFERRED EMBODIMENTS

Technical schemes in the embodiments of the present application will be clearly and completely described below in combination with accompanying drawings in the embodiments of the present application. Obviously, the described embodiments are only part of the embodiments of the present application, not all of them. Based on the embodiments of the present application, all other embodiments obtained by those skilled in the art without making creative efforts shall fall within the scope of protection of the present application.

It should be noted that the terms "include", "includes", "including", "have", "has", "having", or any other variations thereof referred to in the documents of the present application are intended to cover a non-exclusive inclusion. The terms "first", "second", etc., are used to distinguish similar objects, and are not necessary to be used to describe a specific order or sequence. Unless the context clearly indicates, it should be understood that data used in this way can be interchanged under appropriate circumstances. In addition, the embodiments and features in the embodiments in the present application can be combined with each other without conflict. Moreover, in the following description, description of the well-known structure and technology is omitted if it may unnecessarily obscure the concepts of the present application.

A brightness adjusting method for multi illumination light sources based on a HCI mode on a touchable brightness adjusting interface is provided in the present application. Compared with list switches and complex sliding bars on a traditional interface, the brightness adjusting method provided in the present application is more in line with a user's behaviors, and the touchable brightness adjusting interface is more concise and understandable. Moreover, the present application can support switching of switch states and brightness adjusting of multiple illumination light sources at the same time. Application fields of the brightness adjusting method for multi illumination light sources include, but not limited to, brightness adjusting of multi illumination light sources in scenes such as cars, sport utility vehicles (SUVs), trucks, coaches, and aircraft cockpits. The present application can be quickly deployed in various areas such as vehicles' central control screens, armrests, seat sides, portable touchable mobile devices and the like, and support an intuitive blind operation.

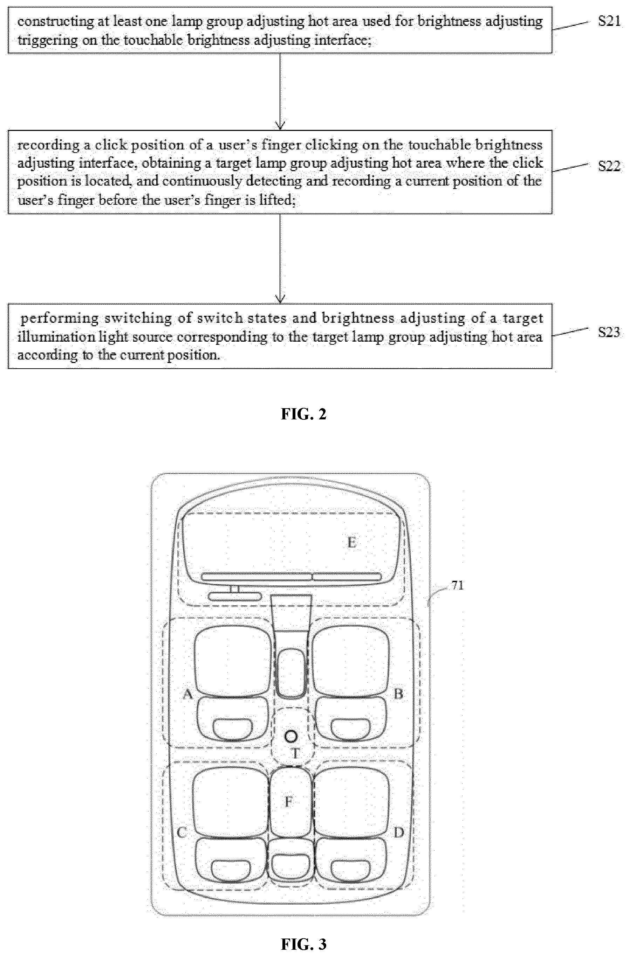

Please refer to FIG. 2, which is a flowchart of the brightness adjusting method for multi illumination light sources provided in the embodiments of the present application. As shown in FIG. 2, the brightness adjusting method in the embodiments includes the following steps: S21: constructing at least one lamp group adjusting hot area used for brightness adjusting triggering on the touchable brightness adjusting interface; S22: recording a click position of a user's finger clicking on the touchable brightness adjusting interface, obtaining a target lamp group adjusting hot area where the click position is located, and continuously detecting and recording a current position of the user's finger before the user's finger is lifted; and S23: performing switching of switch states and brightness adjusting of a target illumination light source corresponding to the target lamp group adjusting hot area according to the current position. A detailed explanation is given as follows.

About the step S21: constructing at least one lamp group adjusting hot area used for brightness adjusting triggering on the touchable brightness adjusting interface.

Specifically, the lamp group adjusting hot area includes a plurality of sub-control hot areas and a total control hot area. Each of the sub-control hot areas is used to adjust at least one of the multi illumination light sources, and the total control hot area is used to adjust all illumination light sources. That is, as a brightness controller of a corresponding illumination light source, the sub-control hot area is used to control switch states of the corresponding illumination light source and adjust a corresponding brightness value. As a brightness controller of all illumination light sources, the total control hot area is used to unifiedly control switch states of all illumination light sources and unifiedly adjust corresponding brightness values. Wherein, the touchable brightness adjusting interface can be a touch display screen in a car or a touch display screen of a mobile device, or other interfaces that can provide touch operations. The touchable brightness adjusting interface is deployed in various areas such as vehicles' central control screens, armrests, seat sides, portable touch mobile devices and the like.

In some embodiments, the lamp group adjusting hot area is established based on a down-scaled top view of an interior layout of the vehicle (i.e., a reduced scale representation which is proportional to the reality). A controllable area of each sub-control hot area is adapted to a target illumination area of a corresponding illumination light source, for example, shapes are similar and sizes are proportional. So that touch of the sub-control hot area can truly reflect a target illumination light source that the user wants to manipulate.

Please refer to FIG. 3, which is a schematic diagram of the division of the lamp group adjusting hot area provided in the embodiments of the present application. Specifically, taking a double row seat model vehicle and independent illumination in each seat area as an example, the lamp group adjusting hot area established based on a down-scaled top view of the interior layout of the vehicle on the touchable brightness adjusting interface 71 includes: the total control hot area T used as an unified switch of illumination light sources in the whole vehicle and used to unifiedly adjust brightness of the illumination light sources in the whole vehicle, a sub-control hot area A corresponding to a target illumination area of an illumination light source in a driver's area of the vehicle, a sub-control hot area B corresponding to a target illumination area of an illumination light source in a front passenger seat's area of the vehicle, a sub-control hot area C corresponding to a target illumination area of an illumination light source in a left back seat's area of the vehicle, and a sub-control hot area D corresponding to a target illumination area of an illumination light source in a right back seat's area of the vehicle. Optionally, the lamp group adjusting hot area further includes a sub-control hot area E corresponding to a target illumination area of an illumination light source in a central control area of the vehicle and a sub-control hot area F corresponding to a target illumination area of an illumination light source in a middle back seat's area of the vehicle. User's adjusting operations for the total control hot area T or the corresponding sub-control hot areas A to F are directly synchronized to brightness adjusting operations for the corresponding illumination light sources in the corresponding areas of the vehicle. That is, independent illumination in six areas in the vehicle can be realized. Independent control of switches and adjustment of brightness respectively of the illumination light source in each area can be realized through the zonal independent illumination. Moreover, the touchable brightness adjusting interface is simple, and the touch operation is intuitive, simple, and efficient that intuitive blind operation can be realized.

It should be noted that the division and the number of sub-control hot areas can be adjusted according to the layout of the touchable brightness adjusting interface and the number of controllable illumination light sources. According to the above-mentioned example of the double row seat model vehicle and the independent illumination in each seat area, those skilled in the art can also obtain implementations of the present application without creative efforts on two seat vehicles, three row seat vehicles, buses, and other vehicles. Each sub-control hot area is only used when the user determines an area it belongs to each time he clicks. In addition, a control mode of the total control hot area T can be multiplexed in a form of the total control sub-hot area T1 and the total control sub-hot area T2 for total control of a front row of all illumination light sources/a back row of all illumination light sources. According to actual vehicle configuration, some vehicle models may have more or less zonal independent illumination areas than the embodiment shown in FIG. 3, and the touchable brightness adjusting interface can also be equipped with more or less lamp group adjusting hot areas. For example, for some models that restrict zonal brightness adjustment in the actual vehicle configuration, it can be set that only the total control hot area supports brightness adjusting by sliding, and other sub-control hot areas only respond to the switching operations of the switch states of the illumination light sources.

About the step S22: recording the click position of the user's finger clicking on the touchable brightness adjusting interface, obtaining the target lamp group adjusting hot area where the click position is located, and continuously detecting and recording the current position of the user's finger before the user's finger is lifted.

Specifically, as a controllable area range of each lamp group adjusting hot area is established based on a down-scaled top view of the interior layout of the vehicle, a processor configured under the touchable brightness adjusting interface can detect and record the click position of the user's finger, and a controllable area range of the click position is calculated, so as to obtain the target lamp group adjusting hot area corresponding to the click position. And the processor is used to record the current position before the user's finger is lifted. When the user initiates an interactive operation, the processor will record the click position, calculate and determine an illumination light source that the user wants to adjust, so that an adjusted signal can be sequentially transmitted to a corresponding illumination light source. It should be noted that the lamp group adjusting hot area is only used when determining the click position each time. If the user's finger does not slide before lifting, the switch states of the illumination light source which corresponds to a target lamp group adjusting hot area corresponding to the click position are controlled by switching after the user's finger is lifted, and its brightness value is not controlled/adjusted (that is, in this state, an on or off operation of the corresponding illumination light source will be performed only after the user's finger is lifted). If the user's finger slides before lifting, the processor will adjust the corresponding brightness of a real-time illumination light source according to the sliding amount of the user's finger in real time (that is, in this state, if the user's finger is not lifted, the on or off operation of the corresponding illumination light source can also be triggered. Even if the user's finger returns to the click position, the brightness of the illumination light source will be adjusted and controlled continuously).

About the step S23: performing the switching of the switch states and the brightness adjusting of the target illumination light source corresponding to the target lamp group adjusting hot area according to the current position.

In some embodiments, when the current position is same as the click position and the user's finger is lifted, only the switching of the switch states of the target illumination light source is performed. When the current position is different from the click position, the target illumination light source is turned on, and the brightness of the target illumination light source is adjusted synchronously according to the sliding amount of the current position relative to the click position. Because the controllable area range of each lamp group adjusting hot area is established based on a down-scaled top view of the interior layout of the vehicle, the processor configured under the touchable brightness adjusting interface is used to detect and calculate the click position, and detect and calculate the current position before the user's finger is lifted. When the user initiates the interactive operation, the processor will record the click position, calculate and determine the illumination light source that the user wants to adjust. If the user's finger does not slide before lifting (the current position is same as the click position), the switch states of the illumination light source which corresponds to the target lamp group adjusting hot area corresponding to the click position are controlled by switching after the user's finger is lifted, and its brightness value is not controlled/adjusted (that is, in this state, the on or off operation of the corresponding illumination light source will be performed only after the user's finger is lifted). If the user's finger slides before lifting (the current position is different from the click position), the processor will adjust the corresponding brightness of the real-time illumination light source according to the sliding amount of the user's finger in real time (that is, in this state, if the user's finger is not lifted, the on or off operation of the corresponding illumination light source can also be triggered. Even if the user's finger returns to the click position, the brightness of the illumination light source will be adjusted and controlled continuously).

In some embodiments, the brightness adjustment for the target illumination light source can also be reflected in the target lamp group adjusting hot area corresponding to the touchable brightness adjusting interface in real time. For example, when the user clicks one lamp group adjusting hot area to turn on the target illumination light source, the lamp group adjusting hot area and the target illumination light source are lit up to a preset brightness value at the same time. When the user clicks one lamp group adjusting hot area and slides his finger to turn on and adjust the brightness of the target illumination light source, the lamp group adjusting hot area and the target illumination light source are lit up at the same time, and the brightness of the lamp group adjusting hot area and the brightness of the target illumination light source change in accordance with the sliding amount of a longitudinal coordinate of the current position, so as to improve intuitive and friendly handling. A light-emitting circuit controlled by a controller, which is configured under the touchable brightness adjusting interface, is used to perform lighting/resting screen of the target lamp group adjusting hot area, and display current brightness in real time.

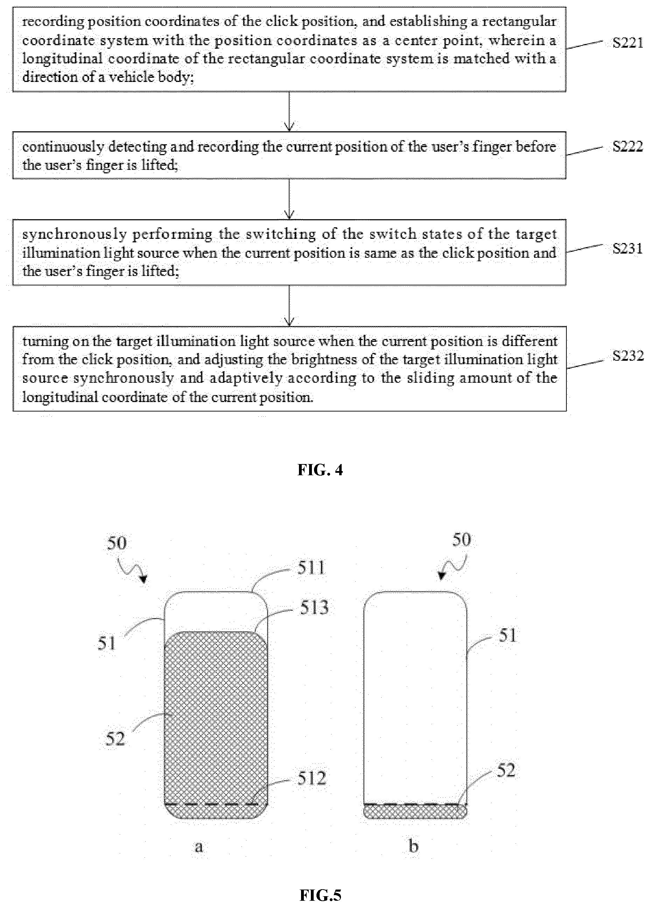

In some embodiments, the step S22 further includes: S221: recording position coordinates of the click position, and establishing a rectangular coordinate system with the position coordinates as a center point, wherein a longitudinal coordinate of the rectangular coordinate system is matched with a direction of a vehicle body; and S222: continuously detecting and recording the current position of the user's finger before the user's finger is lifted. Accordingly, the step 23 further includes: S231: synchronously performing the switching of the switch states of the target illumination light source when the current position is same as the click position and the user's finger is lifted. Accordingly, the target illumination light source is switched from the off state to the on state, and the brightness when it is turned on can be a preset brightness value (for example, it is the brightness value when it was turned off last time, which can be memorized and directly assigned to the target illumination light source when it is turned on this time). S232: turning on the target illumination light source when the current position is different from the click position, and adjusting the brightness of the target illumination light source synchronously and adaptively according to the sliding amount of the longitudinal coordinate of the current position. A flowchart of the above-mentioned brightness adjusting example is shown in FIG. 4.

In some embodiments, the step of adjusting the brightness of the target illumination light source synchronously and adaptively according to the sliding amount of the longitudinal coordinate of the current position further includes: mapping the sliding amount of the longitudinal coordinate of the current position into a brightness sliding bar in real time. Wherein the brightness sliding bar is displayed on the touchable brightness adjusting interface to provide users with an intuitive indication of the brightness value of the real-time illumination light source. The brightness sliding bar can be displayed on the target lamp group adjusting hot area, and can also be displayed on other areas of the touchable brightness adjusting interface. With sliding of the user's finger, a position of a sliding block of the brightness sliding bar changes in real time, and display brightness corresponding to the target lamp group adjusting hot area on the touchable brightness adjusting interface and the brightness corresponding to the real-time illumination light source also change in real time.

Please refer to FIG. 5, in some embodiments, the brightness sliding bar 50 is composed of a sliding frame 51 and a sliding block 52. Specifically, as shown in part a of FIG. 5, a top portion 511 of the sliding frame 51 is corresponding to the maximum brightness Lux-max calibrated by the target illumination light source. A bottom portion of the sliding frame 51 is provided with a critical point 512 of the lowest brightness Lux-min calibrated by the target illumination light source and the off state of the target illumination light source. A top portion 513 of a position covered by the sliding block 52 is corresponding to the current brightness Lux-now of the target illumination light source. The brightness sliding bar can be configured and displayed on the touchable brightness adjusting interface after the illumination light source is turned on to indicate a current brightness value of the illumination light source (a memory brightness value when it was turned off last time). The brightness sliding bar can be configured and displayed on the touchable brightness adjusting interface after the user's finger clicks and slides to indicate the current brightness value. When thread of the user's finger sliding downward is too large, the current brightness value of the illumination light source reaches the critical point downward (accordingly, the brightness sliding bar 50 is displayed below the critical point 512 of the sliding frame 51 on a top of the sliding block 52, as shown in part b of FIG. 5), the illumination light source is turned off. It should be noted that the brightness sliding bar is only used to indicate the current brightness value of the target illumination light source, so as to give the user an intuitive brightness indication. The user's adjusting of the target illumination light source does not need to be carried out for the brightness sliding bar, that is, the user does not need to select and slide the sliding block to adjust the target illumination light source (to prevent a problem of poor user experience due to the fact that the sliding block is usually set to be small, the user needs to carefully select and slide, and cannot perform the intuitive blind operation), which is convenient to realize the intuitive blind operation. In other embodiments, the brightness sliding bar can also be used in other forms to indicate the current brightness value of the target illumination light source.

In some embodiments, the target illumination light source is configured to have a memory brightness value according to the sliding amount of the longitudinal coordinate of the current position. The memory brightness value is used to be assigned to the target illumination light source when the target illumination light source is turned off and then turned on again, so that the target illumination light source can perform brightness display with the memory brightness value. That is, the memory brightness value of the target illumination light source before turning off last time is used as an initial brightness value of this lighting, and the memory brightness value is reconfigured to be a final brightness value after this lighting when all sliding operations are finished after this lighting. It should be noted that if the sliding operations after this lighting cause the target illumination light source to be turned off directly, the memory brightness value will not be reconfigured. That is, the current brightness information (that is, the brightness value is 0) will not be updated to the memory brightness value. That is to say, according to the configuration, each illumination light source can have a unique memory brightness value (i.e., brightness preference). It can be understood that the sliding operations triggered in the total control hot area of the lamp group adjusting hot area will overwrite the brightness preference of all its associated illumination light sources.

In some embodiments, the step S22 further includes: configuring a buffer area based on the click position, and determining the current position to be different from the click position if the current position is detected to exceed the buffer area for a first time before the user's finger is lifted, that is to say, the user's finger slides. According to the actual vehicle configuration, shape and size of the buffer area can be dynamically configured or adjusted, and a radius of the buffer area can be greater than or equal to 0, which is less than a set value of a preset threshold. When the radius of the buffer area is 0, control becomes effective when the user's finger slides after clicking down, and the current brightness of the target illumination light source can be infinitely adjusted when the user's finger slides slightly.

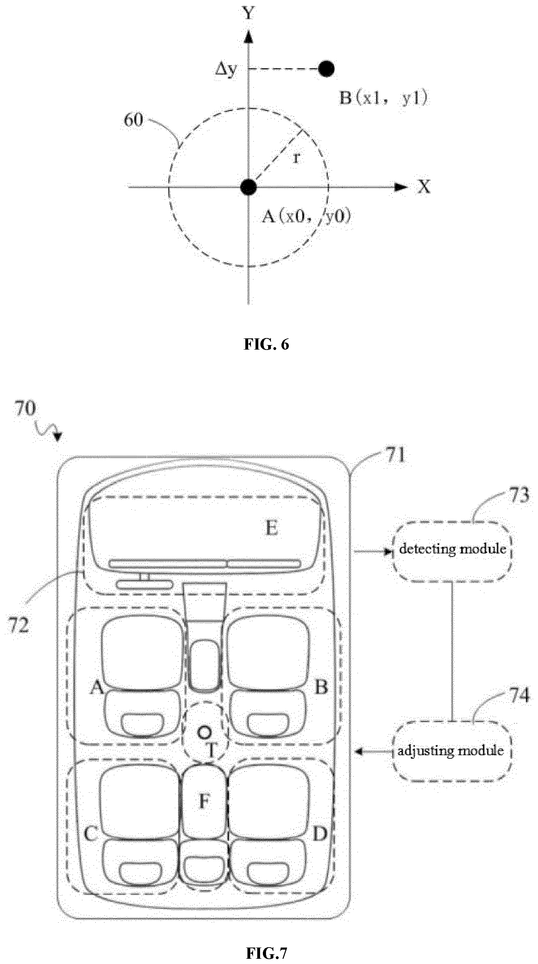

Please refer to FIG. 6, which is a schematic diagram of the detection of a finger position provided in the embodiments of the present application. Specifically, when the user initiates an interactive operation, the processor will record position coordinates A (x0, Y0) where the user clicks, and a rectangular coordinate system will be established with the position coordinates as a center point. Wherein, a longitudinal coordinate (Y coordinate axis) of the rectangular coordinate system is matched with a direction of a vehicle body. According to buffer area requirements of the actual vehicle configuration, a function or lattice with A (x0, y0) as a center and composed of XY coordinates can be drawn to describe and delimit a target buffer area. For example, in FIG. 6, taking the position coordinates A (x0, y0) as the center point and a preset threshold as the radius r as an example, a target buffer area 60 is drawn (the buffer area with abs.y = buffer r as an example can be drawn). The processor will continuously detect the current position of the user's finger and record the position coordinates B (x1, y1). The processor will continuously determine whether B (x1, y1) exceeds the target buffer area 60 before the user's finger is lifted. If B (x1, y1) does not exceed the target buffer area 60, only the switching of the switch states of the illumination light source which corresponds to the target lamp group adjusting hot area corresponding to the click position is controlled after the finger is lifted, and its brightness value is not controlled/adjusted (that is, in this state, the user will perform the on or off operation of the corresponding illumination light source only after the finger is lifted). If B (x1, y1) exceeds the target buffer area 60, the processor can stop determining whether the current position of the user's finger is in the target buffer area 60, and according to the sliding amount Δy(Δy=y1-y0) of the user's finger along the Y axis in real time, the corresponding brightness of the real-time illumination light source can be adjusted (that is, in this state, the on or off operation of the corresponding illumination light source can also be triggered when the user's finger is not lifted, even if the user's finger returns to the click position, it will continue to adjust and control the brightness of the illumination light source). The processor can also map the sliding amount of the user's finger along the Y axis onto the brightness sliding bar in real time.

In some embodiments, the buffer area can be configured only in the total control hot area, or the buffer area can also be configured in the total control hot area and at least some of the sub-control hot areas. According to the actual vehicle configuration, some models can be without zonal switches or brightness control. If some vehicle models restrict zonal brightness adjusting, the sub-control hot area only responds to a switching operation of the switch states, and does not respond to a brightness adjusting operation of sliding adjusting.

In some embodiments, the total control hot area includes an interactive light spot. When states of all illumination light sources controlled by the total control hot area are off, the interactive light point is configured to present a first state. When the states of all illumination light sources controlled by the total control hot area are on, the interactive light point is configured to present a second state. Wherein, the first state can be represented by an unfilled closed shape (such as a circle) in the total control hot area shown in FIG. 3. In the first state, if a click operation is detected in the total control hot area, all associated illumination light sources will be lit up. The second state is represented by a filled closed shape (such as a circle). In the second state, if a click operation is detected in the total control hot area, all associated illumination light sources will be turned off.

In some embodiments, in the first state, if the click operation is detected in the total control hot area, all associated illumination light sources are lit up with their memory brightness values. In the second state, if the click operation is detected in the total control hot area, all associated illumination light sources are turned off and the brightness values before turning off are memorized as the memory brightness values. That is, for the click operation triggered in the total control hot area, the switching of the switch states of all its associated illumination light sources is controlled. The brightness value formed by the sliding operation for each sub-control hot area is memorized and used as the memory brightness value during the click operation triggered in the total control hot area for turning off all its associated illumination light sources. So that when the illumination light source corresponding to the sub-control hot area is turned on next time or the click operation triggered in the total control hot area for turning on all its associated illumination light sources, the corresponding illumination light source is lit up with its memory brightness value. It should be noted that for the adjusted brightness value generated by the sliding operation triggered in the total control hot area, the brightness of all its associated illumination light sources is updated to the adjusted brightness value (that is, the brightness preference of all its associated illumination light sources is overwritten). In other embodiments, in the first state, if the click operation is detected in the total control hot area, all associated illumination light sources can be lit up with a unified set value. In the second state, if the click operation is detected in the total control hot area, all associated illumination light sources are directly turned off and their brightness values are reset/initialized to the set values.

According to the above content, it can be seen that the brightness adjusting system for multi illumination light sources provided in the embodiments of the present application can realize zonal independent illumination in the plurality of areas in the interior of the vehicle. Independent control of the switches and adjustment of brightness respectively of illumination light sources in each area can be realized by the zonal independent illumination; and the touchable brightness adjusting interface is simple, the touch operation is intuitive, simple, and efficient that intuitive blind operation can be realized. Compared with list switches and complex sliding bars on the traditional interface, the brightness adjusting method provided in the present application is more in line with user's behaviors, and the touchable brightness adjusting interface is more concise and understandable. Moreover, the present application can support the switching of the switch states and the brightness adjusting of the multiple illumination light sources at the same time. The application fields of the brightness adjusting method for multi illumination light sources include, but not limited to, brightness adjusting for multi illumination light sources in scenes such as cars, SUVs, trucks, coaches, and aircraft cockpits. The present application can be quickly deployed in various areas such as vehicles' central control screens, armrests, seat sides, portable touchable mobile devices and the like. According to the actual vehicle configuration, each illumination light source can have a unique memory brightness value and can be rewritten. According to the actual vehicle configuration, some vehicles may have more or less zonal independent illumination areas, and the touchable brightness adjusting interface can also be equipped with more or less lamp group adjusting hot areas. According to the actual vehicle configuration, it can be configured that the current brightness can be infinitely adjusted by sliding slightly of the user's finger. The buffer area can also be configured to infinitely adjust the current brightness, after the user's finger slides out of the buffer area, and the shape and size of the buffer area can be dynamically configured or adjusted. According to the actual vehicle configuration, some vehicle models can be set that only the total control hot area supports brightness adjusting by sliding, and other sub-control hot areas only respond to the switching operation of the switch states of the illumination light source.

Based on a same inventive concept, a brightness adjusting system for multiple illumination light sources is also provided in the present application. Since the brightness adjusting system can implement the brightness adjusting method of multiple illumination light sources provided in the embodiments of the present application, and the principle of the brightness adjusting system to solve the problem is similar to that of the brightness adjusting method, the embodiments of the brightness adjusting system can refer to the implementations of the above-mentioned brightness adjusting method, and repetition will not be repeated.

Please refer to FIG. 7, which is a schematic architectural diagram of the brightness adjusting system for multiple illumination light sources provided in the embodiments of the present application. As shown in FIG. 7, the brightness adjusting system 70 for multi illumination light sources includes: a touchable brightness adjusting interface 71, a plurality of lamp group adjusting hot areas 72 (as shown in the figure, the sub-control hot areas A ~ F and the total control hot area T), a detecting module 73, and an adjusting module 74. In the figure, the detecting module 73 and the adjusting module 74 are shown in a virtual frame outside the touchable brightness adjusting interface 71, which is used to illustrate that the detecting module 73 and the adjusting module 74 are configured on a lower surface of the touchable brightness adjusting interface 71 opposite to a user facing side, and are not visible relative to the touchable brightness adjusting interface 71. Wherein, the detecting module 73 and the adjusting module 74 can be implemented by processors with detection, calculation, and control functions.

Specifically, the plurality of lamp group adjusting hot areas 72 are constructed on the touchable brightness adjusting interface 71, which are used for brightness adjusting triggering. Wherein, the plurality of lamp group adjusting hot areas 72 include a plurality of sub-control hot areas and a total control hot area. Each of the sub-control hot areas is used to adjust at least one of the multi illumination light sources, and the total control hot area is used to adjust all illumination light sources. The detecting module 73 is used for recording a click position of a user's finger clicking on the touchable brightness adjusting interface, obtaining a target lamp group adjusting hot area where the click position is located, and continuously detecting and recording a current position of the user's finger before the user's finger is lifted. The adjusting module 74 is used for performing switching of switch states and brightness adjusting of a target illumination light source corresponding to the target lamp group adjusting hot area according to the current position.

In some embodiments, the lamp group adjusting hot area is established based on a down-scaled top view of an interior layout of the vehicle. A controllable area of each sub-control hot area is adapted to a target illumination area of a corresponding illumination light source, for example, shapes are similar and sizes are proportional. So that touch of the sub-control hot area can truly reflect a target illumination light source that the user wants to manipulate. As a brightness controller of a corresponding illumination light source, the sub-control hot area is used to control switch states of the corresponding illumination light source and adjust a corresponding brightness value. As a brightness controller of all illumination light sources, the total control hot area is used to unifiedly control switch states of all illumination light sources and unifiedly adjust a corresponding brightness value. Wherein, the touchable brightness adjusting interface can be a touch display screen in a car or a touch display screen of a mobile device, or other interfaces that can provide touch operation. The touchable brightness adjusting interface is deployed in various areas such as vehicles' central control screens, armrests, seat sides, portable touch mobile devices and the like.

In some embodiments, when the detection module 73 detects that the current position is same as the click position and the user's finger is lifted, the adjusting module 74 only performs the switching of the switch states of the target illumination light source. When the detection module 73 detects that the current position is different from the click position, the adjusting module 74 turns on the target illumination light source and synchronously adjusts brightness of the target illumination light source according to the sliding amount of the current position relative to the click position. Because a controllable area range of each lamp group adjusting hot area is established based on the down-scaled top view of the interior layout of the vehicle, the detecting module 73 configured under the touchable brightness adjusting interface is used to detect and calculate the click position, and detect and calculate the current position before the user's finger is lifted. When the user initiates an interactive operation, the detecting module 73 will record the click position, calculate and determine the illumination light source that the user wants to adjust. If the user's finger does not slide before lifting (the current position is same as the click position), the switch states of the illumination light source which corresponds to the target lamp group adjusting hot area corresponding to the click position are controlled to switch by the adjusting module 74 after the user's finger is lifted, and its brightness value is not controlled/adjusted (that is, in this state, an on or off operation of the corresponding illumination light source will be performed only after the user's finger is lifted). If the user's finger slides before lifting (the current position is different from the click position), the adjusting module 74 will adjust the corresponding brightness of a real-time illumination light source according to the sliding amount of the user's finger in real time (that is, in this state, if the user's finger is not lifted, the on or off operation of the corresponding illumination light source can also be triggered. Even if the user's finger returns to the click position, the brightness of the illumination light source will be adjusted and controlled continuously).

In some embodiments, the brightness adjustment for the target illumination light source can also be reflected in the target lamp group adjusting hot area corresponding to the touchable brightness adjusting interface in real time. For example, when the user clicks one lamp group adjusting hot area to turn on the target illumination light source, the lamp group adjusting hot area and the target illumination light source are lit up to a preset brightness value at the same time. When the user clicks one lamp group adjusting hot area and slides his finger to turn on and adjust the brightness of the target illumination light source, the lamp group adjusting hot area and the target illumination light source are lit up, and the brightness of the lamp group adjusting hot area and the brightness of the target illumination light source change in accordance with the sliding amount of a longitudinal coordinate of the current position, so as to improve intuitive and friendly handling. A light-emitting circuit controlled by a controller, which is configured under the touchable brightness adjusting interface, is used to perform lighting/resting screen of the target lamp group adjusting hot area, and display current brightness in real time.

In some embodiments, the sliding amount of the longitudinal ordinate of the current position is mapped to a brightness sliding bar in real time. Wherein, the brightness sliding bar is displayed on the touchable brightness adjusting interface to provide users with an intuitive indication of the brightness value of the real-time illumination light source. The brightness sliding bar can be displayed on the target lamp group adjusting hot area, and can also be displayed on other areas of the touchable brightness adjusting interface. With sliding of the user's finger, a position of a sliding block of the brightness sliding bar changes in real time, and display brightness corresponding to the target lamp group adjusting hot area on the touchable brightness adjusting interface and the brightness corresponding to the real-time illumination light source also change in real time. A composition diagram of the brightness sliding bar is shown in FIG. 5.

In some embodiments, the target illumination light source is configured to have a memory brightness value according to the sliding amount of the longitudinal coordinate of the current position. The memory brightness value is used to be assigned to the target illumination light source when the target illumination light source is turned off and then turned on again, so that the target illumination light source can perform brightness display with the memory brightness value. That is, the memory brightness value of the target illumination light source before turning off last time is used as an initial brightness value of this lighting, and the memory brightness value is reconfigured to be a final brightness value after this lighting when all sliding operations are finished after this lighting. It should be noted that if the sliding operations after this lighting cause the target illumination light source to be turned off directly, the memory brightness value will not be reconfigured. That is, the current brightness information (that is, the brightness value is 0) will not be updated to the memory brightness value. That is to say, according to the configuration, each illumination light source can have a unique memory brightness value (i.e., brightness preference). It can be understood that the sliding operations triggered in the total control hot area of the lamp group adjusting hot area will overwrite the brightness preference of all its associated illumination light sources.

In some embodiments, a buffer area is configured based on the click position. If the current position is detected to exceed the buffer area for a first time before the user's finger is lifted, the current position is determined to be different from the click position. That is to say, the user's finger slides. According to actual vehicle configuration, shape and size of the buffer area can be dynamically configured or adjusted, and a radius of the buffer area can be greater than or equal to 0, which is less than a set value of a preset threshold. When the radius of the buffer area is 0, control becomes effective when the user's finger slides after clicking down, and the current brightness of the target illumination light source can be infinitely adjusted when the user's finger slides slightly.

In some embodiments, the buffer area can be configured only in the total control hot area, or the buffer area can also be configured in the total control hot area and at least some of the sub-control hot areas. According to the actual vehicle configuration, some models can be without zonal switches or brightness control. If some vehicle models restrict zonal brightness adjusting, the sub-control hot area only responds to a switching operation of the switch states, and does not respond to a brightness adjusting operation of sliding adjusting.

In some embodiments, the total control hot area includes an interactive light spot. When states of all illumination light sources controlled by the total control hot area are off, the interactive light point is configured to present a first state. When the states of all illumination light sources controlled by the total control hot area are on, the interactive light point is configured to present a second state. Wherein, the first state can be represented by an unfilled closed shape (such as a circle) in the total control hot area shown in FIG. 3. In the first state, if a click operation is detected in the total control hot area, all associated illumination light sources will be lit up. The second state is represented by a filled closed shape (such as a circle). In the second state, if a click operation is detected in the total control hot area, all associated illumination light sources will be turned off.

In some embodiments, in the first state, if the click operation is detected in the total control hot area, all associated illumination light sources are lit up with their memory brightness values. In the second state, if the click operation is detected in the total control hot area, all associated illumination light sources are turned off and the brightness value before turning off is memorized as the memory brightness value. That is, for the click operation triggered in the total control hot area, the switching of the switch states of all its associated illumination light sources is controlled. The brightness value formed by the sliding operation for each sub-control hot area is memorized and used as the memory brightness value during the click operation triggered in the total control hot area for turning off all its associated illumination light sources. So that when the illumination light source corresponding to the sub-control hot area is next turned on or the click operation triggered on the total control hot area for turning on all its associated illumination light sources, the corresponding illumination light source is lit up with its memory brightness value. It should be noted that for the adjusted brightness value generated by the sliding operation triggered in the total control hot area, the brightness of all its associated illumination light sources is updated to the adjusted brightness value (that is, the brightness preference of all its associated illumination light sources is overwritten). In other embodiments, in the first state, if a click operation is detected in the total control hot area, all associated illumination light sources can be lit up with a unified set value. In the second state, if the click operation is detected in the total control hot area, all associated illumination light sources are directly turned off and their brightness values are reset/initialized to the set values.

According to the above content, it can be seen that the brightness adjusting system for multi illumination light sources provided in the embodiments of the present application can realize zonal independent illumination in the plurality of areas in the interior of the vehicle. Independent control of the switches and adjustment of brightness respectively of the illumination light sources in each area could be realized by the zonal independent illumination; and the touchable brightness adjusting interface is simple, the touch operation is intuitive, simple, and efficient that intuitive blind operation can be realized. Compared with list switches and complex sliding bars on a traditional interface, the brightness adjusting method provided in the present application is more in line with user's behaviors, and the touchable brightness adjusting interface is more concise and understandable. Moreover, the present application can support the switching of the switch states and the brightness adjusting of multiple illumination light sources at the same time. The application fields of the brightness adjusting method for multi illumination light sources include, but not limited to, the brightness adjusting for multi illumination light sources in scenes such as cars, SUVs, trucks, coaches, and aircraft cockpits. The present application can be quickly deployed in various areas such as vehicles' central control screens, armrests, seat sides, portable touchable mobile devices and the like. According to the actual vehicle configuration, each illumination light source can have a unique memory brightness value and can be rewritten. According to the actual vehicle configuration, some vehicles may have more or less zonal independent illumination areas, and the touchable brightness adjusting interface can also be equipped with more or less lamp group adjusting hot areas. According to the actual vehicle configuration, it can be configured that the current brightness can be infinitely adjusted by sliding slightly of the user's finger. The buffer area can also be configured to infinitely adjust the current brightness, after the user's finger slides out of the buffer area, and the shape and size of the buffer area can be dynamically configured or adjusted. According to the actual vehicle configuration, some vehicle models can be set that only the total control hot area supports brightness adjusting by sliding, and other sub-control hot areas only respond to the switching operation of the switch states of the illumination light source.

It should be noted that the embodiments in this specification are described in a progressive manner, and each embodiment focuses on differences from other embodiments. The same/similar parts between the embodiments can be referred to each other. For the method embodiments disclosed in the embodiments, since they correspond to the system embodiments disclosed in the embodiments, the description is relatively simple. For relevant parts, please refer to the partial description of the system embodiments.

Those skilled in the art can understand that all or part of the steps in the implementation of the above-mentioned method can be completed by instructing relevant hardware through a program. The program can be stored in a computer-readable storage medium, which is referred to here as a storage medium, such as read only memory (ROM)/random access memory (RAM), magnetic disc, optical disc, etc. That is, a computer-readable storage medium is further disclosed in the present application. The computer-readable storage medium stores a computer executable program. When the computer executable program is executed, the brightness adjusting method described in the above embodiments of the present application is realized. The computer executable program can be stored in RAM, memory, ROM, electrically programmable ROM, electrically erasable programmable ROM, register, hard disk, removable disk, CD-ROM, or any other form of storage medium known in the technical field.

Those skilled in the art should further realize that the system and method steps of the examples described in combination with the embodiments disclosed herein can be implemented in electronic hardware, computer software, or a combination of the two. In order to clearly illustrate the interchangeability of hardware and software, the composition and steps of the examples have been generally described in the above description according to functions. Whether these functions are performed in hardware or software depends on the specific application of the technical scheme and the design constraints. Those skilled in the art can use different methods to realize the described functions for each specific application, but such realization should not be considered beyond the scope of the present application.

The above-mentioned is only the specific implementation of the present application, but the scope of protection of the present application is not limited to this. Any technician familiar with the technical field can easily think of changes or replacements within the technical scope disclosed in the present application, which should be covered in the scope of protection of the present application.

## Claims

1. A brightness adjusting method for multi illumination light sources, performed by a brightness adjusting apparatus of a vehicle, comprising:
constructing at least one lamp group adjusting hot area (72) used for brightness adjusting triggering on a touchable brightness adjusting interface (71); wherein the lamp group adjusting hot area (72) comprises a plurality of sub-control hot areas (A~F) and a total control hot area (T); each of the sub-control hot areas (A~F) is used to adjust at least one of the multi illumination light sources, and the total control hot area (T) is used to adjust all illumination light sources;
recording a click position of a user's finger clicking on the touchable brightness adjusting interface (71), obtaining a target lamp group adjusting hot area where the click position is located, and continuously detecting and recording a current position of the user's finger before the user's finger is lifted; and
performing switching of switch states and brightness adjusting of a target illumination light source corresponding to the target lamp group adjusting hot area according to the current position.

2. The brightness adjusting method as claimed in claim 1, **characterized in that** the lamp group adjusting hot area (72) is established based on a down-scaled top view of an interior layout of the vehicle.

3. The brightness adjusting method as claimed in claims 1 or 2, **characterized in that** the brightness adjusting method further comprises: only performing the switching of the switch states of the target illumination light source when the current position is same as the click position and the user's finger is lifted; and
turning on the target illumination light source, and synchronously adjusting the brightness of the target illumination light source according to the sliding amount of the current position relative to the click position when the current position is different from the click position.

4. The brightness adjusting method as claimed in any of claims 1 to 3, **characterized in that** the brightness adjusting method further comprises: configuring a buffer area based on the click position, and
determining the current position to be different from the click position if the current position is detected to exceed the buffer area for a first time before the user's finger is lifted.

5. The brightness adjusting method as claimed in claim 4, **characterized in that** the buffer area is only configured in the total control hot area (T), or the buffer area is configured in the total control hot area (T) and at least some of the sub-control hot areas (A~F).

6. The brightness adjusting method as claimed in any of claims 1 to 5, **characterized in that** the step of recording the click position of the user's finger clicking on the touchable brightness adjusting interface (71), obtaining the target lamp group adjusting hot area where the click position is located, and continuously detecting and recording the current position of the user's finger before the user's finger is lifted further comprises:
recording position coordinates of the click position, and establishing a rectangular coordinate system with the position coordinates as a center point, wherein a longitudinal coordinate of the rectangular coordinate system is matched with a direction of a vehicle body; and
continuously detecting and recording the current position of the user's finger before the user's finger is lifted; and
the step of performing the switching of the switch states and the brightness adjusting of the target illumination light source corresponding to the target lamp group adjusting hot area according to the current position further comprises:
synchronously performing the switching of the switch states of the target illumination light source when the current position is same as the click position and the user's finger is lifted; and
turning on the target illumination light source when the current position is different from the click position, and adjusting the brightness of the target illumination light source synchronously and adaptively according to the sliding amount of a longitudinal coordinate of the current position.

7. The brightness adjusting method as claimed in claim 6, **characterized in that** the brightness adjusting method further comprises: mapping the sliding amount of the longitudinal coordinate of the current position to a brightness sliding bar (50) in real time; wherein the brightness sliding bar (50) is displayed on the touchable brightness adjusting interface (71).

8. The brightness adjusting method as claimed in claim 7, **characterized in that** the brightness sliding bar (50) is composed of a sliding block (52) and a sliding frame (51); a top portion (511) of the sliding frame (51) is corresponding to the maximum brightness calibrated by the target illumination light source; a bottom portion of the sliding frame (51) is provided with a critical point (512) of the lowest brightness calibrated by the target illumination light source and an off state of the target illumination light source; and a top portion (513) of a position covered by the sliding block (52) is corresponding to the current brightness of the target illumination light source.

9. The brightness adjusting method as claimed in any one of claims 6 to 8, **characterized in that** the brightness method further comprises: configuring the target illumination light source to have a memory brightness value according to the sliding amount of the longitudinal coordinate of the current position.

10. The brightness adjusting method as claimed in any one of claims 1 to 9, **characterized in that** the total control hot area (T) comprises an interactive light spot;
configuring the interactive light point to present a first state when states of all illumination light sources controlled by the total control hot area (T) are off; and
configuring the interactive light point to present a second state when the states of all illumination light sources controlled by the total control hot area (T) are on.

11. The brightness adjusting method as claimed in claim 10, **characterized in that** the brightness adjusting method further comprises: lighting up all associated illumination light sources with memory brightness values if a click operation is detected in the total control hot area (T) in the first state; and
turning off all associated illumination light sources and memorizing brightness values before turning off as the memory brightness values if a click operation is detected in the total control hot area (T) in the second state.

12. A brightness adjusting apparatus for multi illumination light sources, applied to an interior of a vehicle, comprising:
a touchable brightness adjusting interface (71);
a plurality of lamp group adjusting hot areas (72) constructed on the touchable brightness adjusting interface (71) and used for brightness adjusting triggering; wherein the lamp group adjusting hot areas (72) comprise a plurality of sub-control hot areas (A~F) and a total control hot area (T); each of the sub-control hot areas (A~F) is used to adjust at least one of the multi illumination light sources, and the total control hot area (T) is used to adjust all illumination light sources;
a detecting module (73) used for recording a click position of a user's finger clicking on the touchable brightness adjusting interface (71), obtaining a target lamp group adjusting hot area where the click position is located, and continuously detecting and recording a current position of the user's finger before the user's finger is lifted; and
an adjusting module (74) used for performing switching of switch states and brightness adjusting of a target illumination light source corresponding to the target lamp group adjusting hot area according to the current position.

13. A computer readable storage medium, **characterized in that** the storage medium stores computer executable program codes, and the program codes implement the steps of the brightness adjusting method as claimed in any one of claims 1 to 11 when executed by a processor.

14. A computer program, comprising instructions for causing the apparatus of claim 12 to execute the brightness adjusting method as claimed in any one of claims 1 to 11.
